# EUROPÄISCHE PATENTSCHRIFT

(11) **EP 3 702 537 B1**
(45) Veröffentlichungstag und Bekanntmachung des Hinweises auf die Patenterteilung: **08.12.2021**
(21) Anmeldenummer: 20159497.5
(22) Anmeldetag: 26.02.2020
(51) Int. Cl.: E02F 3/36, E02F 3/76, F16L 37/56

(54) **SONDERNUTZFAHRZEUG**
SPECIAL UTILITY VEHICLE
VÉHICULE UTILITAIRE SPÉCIAL

(30) Priorität: 26.02.2019 DE 102019104852
(43) Veröffentlichungstag der Anmeldung: 02.09.2020
(73) Patentinhaber: Aebi Schmidt Deutschland GmbH, 79837 St. Blasien (DE)
(72) Erfinder: Müller, Dieter, 79877 Friedenweiler (DE); Denz, Lorenz Hartmut, 79875 Dachsberg (DE)
(74) Vertreter: Grättinger Möhring von Poschinger Patentanwälte Partnerschaft mbB

(56) Entgegenhaltungen:
- CA-A- 1 153 885
- DE-B- 1 299 305
- US-A- 4 013 182
- US-A- 4 744 159

## Beschreibung

Die vorliegende Erfindung betrifft ein Sondernutzfahrzeug, insbesondere für kommunale Anwendungen, umfassend ein Trägerfahrzeug, ein Anbaugerät und eine Schnellwechseleinrichtung zum auswechselbaren Anbringen des Anbaugeräts frontseitig am Trägerfahrzeug, mit einer fest am Trägerfahrzeug angeordneten Fahrzeugplatte und einer mit dieser verbindbaren, am Anbaugerät angeordneten Geräteplatte. Als Anbaugeräte kommen hierbei insbesondere Schneepflüge, Schneefräsen, Vorbau-Kehrmaschinen sowie andere im Straßendienst genutzte Anbaugeräte in Betracht.

Derartige Sondernutzfahrzeuge sind in verschiedenen Ausgestaltungen bekannt. Offenbart ist ein Sondernutzfahrzeug der obenstehenden Art beispielsweise in DE 1299305 B.

Um, bei einem dem Stand der Technik entsprechenden Sondernutzfahrzeug, Anbaugerät und Trägerfahrzeug miteinander zu verbinden, greifen Hakenstrukturen, die Teil der Geräteplatte sind, von oben in korrespondierende Haken-Aufnahmen an der Fahrzeugplatte ein, sodass das Eigengewicht des Anbaugeräts dazu beiträgt, dass die Geräteplatte und die Fahrzeugplatte in einer miteinander verbundenen Position verharren. Um die Geräteplatte von der Fahrzeugplatte zu trennen, wird die Geräteplatte zunächst so weit nach oben bewegt, bis die Hakenstrukturen nicht mehr in die entsprechenden Haken-Aufnahmen eingreifen, damit anschließend die Geräteplatte und die Fahrzeugplatte horizontal getrennt werden können. Das Anheben und das Absenken der Geräteplatte erfolgt hierbei, bei auf dem Untergrund aufgestelltem Anbaugerät, mittels der Hydraulik des Anbaugerätes.

Diese Vorgehensweise hat sich in den vergangenen Jahrzehnten für das Verbinden sowie für das Trennen von Anbaugerät und Trägerfahrzeug etabliert und bewährt. So basiert beispielsweise DIN EN 15432 2008-05 Anhang A "Schnellwechselsystem VV95 für Frontanbaugeräte" auf demselben Grundprinzip, nämlich dem Anheben der Geräteplatte durch die Hydraulik des Anbaugeräts bei dessen Verbinden mit oder Trennen von dem Trägerfahrzeug. Entsprechendes gilt für die DE 3911734 C2, die sich zur Aufgabe gemacht hat ein Sondernutzfahrzeug der eingangs genannten Art so auszugestalten, dass ohne den Einsatz von Gleitschuhen bzw. Rollen der Verschleiß der Räumleisten und die Lärmbelästigung reduziert wird.

Aus US 3 760 883 A ist ein Sondernutzfahrzeug bekannt, welches eine beweglich an dem Fahrzeug angelenkte Tragrohreinheit mit einem sich horizontal vor der Front des Trägerfahrzeugs erstreckenden Tragrohr aufweist. Die Tragrohreinheit ist mittels einer Aktuatoreinheit in eine abgesenkte und eine angehobene Position bewegbar und hinsichtlich ihrer Neigung verstellbar. Ferner ist eine Geräteplatten-Verriegelungseinheit mit zwei bewegbaren und zum Zusammenwirken mit korrespondierenden Aufnahmen an der Geräteplatte geeigneten Geräteplatten-Verriegelungszapfen vorgesehen. Die Geräteplatte umfasst eine Hakenstruktur, die geeignet ist am Tragrohr der Fahrzeugplatte anzugreifen. Mittels Bewegung des Tragrohrs aus der abgesenkten Position in die angehobene Position (bei an das Tragrohr angreifender Hakenstruktur der Geräteplatte) ist das Anbaugerät aus einer Ruheposition in eine Verriegelungsposition anhebbar, in der die Geräteplatten-Verriegelungszapfen und die korrespondierenden Aufnahmen an der Geräteplatte zueinander fluchten. Dabei steht die Tragrohreinheit spielfrei mit einem Tragrohranschlag an der Geräteplatte in Kontakt. Aus US 4 744 159 A ist ein Sondernutzfahrzeug bekannt, welches eine beweglich angelenkte Tragrohreinheit aufweist.

Die vorliegende Erfindung hat sich zur Aufgabe gemacht, ein Sondernutzfahrzeug obenstehender Art bereitzustellen, bei dem das Verbinden und Trennen von Anbaugerät und Trägerfahrzeug komfortabler, einfacher sowie weniger fehleranfällig durchgeführt werden kann.

Erfindungsgemäß wird dies, wie in Anspruch 1 angegeben, durch ein Sondernutzfahrzeug ermöglicht, dessen Fahrzeugplatte folgenden Merkmale aufweist:
- Eine unbeweglich mit dem Chassis des Trägerfahrzeugs verbundene Fahrzeugplattenbasis,
- eine beweglich an der Fahrzeugplattenbasis angelenkte Tragrohreinheit mit einem sich horizontal vor der Front des Trägerfahrzeugs erstreckenden Tragrohr, wobei das Tragrohr mittels einer Tragrohr-Aktuatoreinheit in eine abgesenkte Position und eine angehobene Position bewegbar ist,
- mindestens einen Tragrohranschlag,
- mindestens eine ein Riegelelement umfassende Tragrohr-Verriegelungseinheit, wobei das Riegelelement in eine aktive und inaktive Stellung bewegbar ist,
- mindestens eine Geräteplatten-Verriegelungseinheit mit zwei bewegbaren und zum Zusammenwirken mit korrespondierenden Aufnahmen an der Geräteplatte geeigneten Geräteplatten-Verriegelungszapfen.

Die (mit der Fahrzeugplatte verbindbare) Geräteplatte umfasst weiterhin mindestens eine Hakenstruktur, welche geeignet ist am Tragrohr der Fahrzeugplatte anzugreifen. Das Tragrohr fungiert somit als Haken-Aufnahme. Durch Bewegung des Tragrohrs aus der abgesenkten Position in die angehobene Position (bei an das Tragrohr angreifender Hakenstruktur der Geräteplatte) wird das Anbaugerät aus einer Ruheposition in eine Verriegelungsposition angehoben, in welcher die Geräteplatten-Verriegelungszapfen und die korrespondierenden Aufnahmen an der Geräteplatte zueinander fluchten. Befinden sich weiterhin das Tragrohr in der angehobenen Position und das mindestens eine Riegelelement in der aktiven Stellung, steht die Tragrohreinheit spielfrei mit dem mindestens einen Tragrohranschlag und dem mindestens einen Riegelelement in Kontakt. Eines der für die vorliegende Erfindung besonders charakteristischen Merkmale ist, mit anderen Worten, demnach, dass die Fahrzeugplatte im Wesentlichen aus einer unbeweglich am Trägerfahrzeug angebrachten Fahrzeugplattenbasis und einer gegenüber dieser bewegbar angelenkten Tragrohreinheit besteht. Deren sich horizontal vor der Front des Trägerfahrzeugs erstreckendes Tragrohr kann dabei mit Hilfe mindestens einer Tragrohr-Aktuatoreinheit (die Teil der Fahrzeugplatte ist) in eine abgesenkte und eine angehobene Position bewegt werden.

Einem Paradigmenwechsel gleichkommend wendet sich die Erfindung dadurch von einem seit Jahrzehnten etablierten Grundprinzip ab; denn nach dem Stand der Technik gestaltet sich der Vorgang des Verbindens von Trägerfahrzeug und Anbaugerät folgendermaßen: Zunächst fährt der Fahrer des Trägerfahrzeugs selbiges so nah an das Anbaugerät heran, bis sich die am Trägerfahrzeug angebrachte Fahrzeugplatte in unmittelbarer Nähe der am Anbaugerät angeordneten Geräteplatte befindet. Nachdem der Fahrer anschließend zumindest die Hydraulik (sowie ggf. zusätzlich auch die Elektrik und/oder sonstige Verbraucher) des Anbaugeräts mit den entsprechenden Systemen des Trägerfahrzeugs verbunden hat, wird die Anbaugerätehydraulik genutzt, um die Geräteplatte anzuheben - mindestens so weit, bis sich die Hakenstrukturen der Geräteplatte nicht mehr in der horizontalen Projektion der korrespondierenden Haken-Aufnahmen der Fahrzeugplatte befinden. Diese, das Eingreifen von Hakenstruktur und Aufnahme ermöglichende, vertikal versetzte Anordnung von Hakenstruktur und Haken-Aufnahme ist zwingende Voraussetzung dafür, dass der Fahrer anschließend das Trägerfahrzeug noch einige Zentimeter näher an das Anbaugerät heranfahren kann ("Nachsetzen") - nah genug, bis die Hakenstrukturen und die korrespondierenden Haken-Aufnahmen in vertikaler Projektion einander überlappen. Daraufhin wird die Geräteplatte mit Hilfe der Anbaugerätehydraulik abgesenkt, wodurch die Hakenstrukturen in die korrespondierenden Haken-Aufnahmen eingreifen und Geräte- und Fahrzeugplatte miteinander verbunden werden. Abschließend verbindet der Fahrer Geräte- und Fahrzeugplatte miteinander mit Hilfe zusätzlicher Sicherungselemente (beispielsweise durch Schraubverbindungen).

Demgegenüber ist in Umsetzung der vorliegenden Erfindung stattdessen das Tragrohr (welches Teil der Tragrohreinheit ist und somit zum bewegbaren Teil der Fahrzeugplatte gehört) durch die mindestens eine Tragrohr-Aktuatoreinheit absenkbar bzw. anhebbar. Diese Beweglichkeit des Tragrohrs ermöglicht das Verbinden von Geräteplatte und Fahrzeugplatte bei gleichzeitigem Anheben des Anbaugeräts aus einer Ruheposition in eine Verriegelungsposition, und zwar ohne Nutzung der Hydraulik des Anbaugeräts.

Somit kann die - das Eingreifen der Hakenstruktur(en) in die Haken-Aufnahme(n) ermöglichende - vertikal versetzte Anordnung von Hakenstruktur der Geräteplatte und Haken-Aufnahme der Fahrzeugplatte herbeigeführt werden, indem die Haken-Aufnahme der Fahrzeugplatte (erfindungsgemäß ausgeführt als Tragrohr) unter die Hakenstruktur der Geräteplatte abgesenkt wird und nicht - wie im Stand der Technik üblich - die Hakenstruktur der Geräteplatte über die Haken-Aufnahme der Fahrzeugplatte angehoben wird.

Bei einem erfindungsgemäßen Sondernutzfahrzeug gestaltet sich der Vorgang des Verbindens von Anbaugerät und Trägerfahrzeug demnach wie folgt: Mit Hilfe der mindestens einen Tragrohr-Aktuatoreinheit wird das Tragrohr in die abgesenkte Position bewegt. Anschließend fährt der Fahrer das Trägerfahrzeug nah an das Anbaugerät heran, bis sich das Tragrohr unterhalb der Hakenstruktur der Geräteplatte befindet. Anschließend wird das Tragrohr mit Hilfe der mindestens einen Tragrohr-Aktuatoreinheit in die angehobene Position bewegt. Dabei greift die Hakenstruktur an dem Tragrohr an, und das Anbaugerät wird von der Ruheposition in die Verriegelungsposition gehoben. Schließlich werden die Tragrohr-Verriegelungseinheiten sowie die Geräteplatten-Verriegelungseinheit betätigt, wodurch sich das mindestens eine Riegelelement in die aktive Stellung und die mindestens zwei Geräteplatten-Verriegelungszapfen in die korrespondierenden Aufnahmen bewegen. Damit sind Geräte- und Fahrzeugplatte ordnungsgemäß verbunden.

Im Vergleich zum Stand der Technik ist der erfindungsgemäße Vorgang des Verbindens von Geräteplatte und Anbaugerät somit komfortabler, einfacher und weniger fehleranfällig:
- Komfortabler, weil die Geräteplatte des Anbaugeräts mit der Fahrzeugplatte des Trägerfahrzeugs ordnungsgemäß verbindbar ist, ohne dass hierfür die Hydraulik des Anbaugeräts mit der Hydraulik des Trägerfahrzeugs verbunden werden muss. Darüber hinaus müssen keine zusätzlichen Sicherungselemente angebracht werden, da die Verriegelung von Geräteplatte und Fahrzeugplatte mittels der Geräteplatten-Verriegelungszapfen erfolgt. Infolgedessen muss der Fahrer während des gesamten erfindungsgemäßen Verbindungsvorgangs die Fahrerkabine kein einziges Mal verlassen.
- Einfacher, weil weniger hohe Anforderungen an das fahrerische Geschick des Fahrers gestellt werden, da das zentimetergenaue "Nachsetzen" des Trägerfahrzeugs, nachdem die Geräteplatte angehoben wurde, entfällt. Besagtes "Nachsetzen" stellt eine erhebliche Herausforderung für den Fahrer dar - auch weil der Bereich der Fahrzeugplatte von der Fahrerposition aus oft nicht direkt einsehbar ist.
- Weniger fehleranfällig, weil der Fahrer dadurch, dass der Verriegelungsvorgang komfortabler und einfacher wird, generell entlastet wird. Diese Entlastung des Fahrers trägt dazu bei, Fehler beim Verbinden von Anbaugerät und Trägerfahrzeug zu vermeiden, die zu Beschädigungen am Sondernutzfahrzeug führen und im ungünstigsten Fall sogar Ursache schwerer Unfälle sein können.

Insbesondere die drei Aspekte
- Beweglichkeit der Tragrohreinheit,
- spielfreies In-Kontakt-Stehen von Tragrohreinheit, mindestens einem Tragrohranschlag und mindestens einem Riegelelement sowie
- Verriegelung von Fahrzeugplatte und Geräteplatte mittels Geräteplatten-Verriegelungszapfen
wirken hierbei synergistisch zusammen und bewirken erst durch genau dieses Zusammenspiel die erfinderische Lösung der oben geschilderten Aufgabenstellung.

Da das Anbaugerät oftmals ein hydraulisches System und/oder ein elektrisches System und/oder ein weiteres Mediensystem für beispielsweise Druckluft oder Wasser umfasst, welches für einen ordnungsgemäßen Betrieb mit dem entsprechenden System des Trägerfahrzeugs zu verbinden ist, ist es im Hinblick auf die Zielsetzung weiterhin vorteilhaft, wenn das Verbinden sowie das Trennen der hydraulischen Systeme und/oder der elektrischen Systeme und/oder der weiteren Mediensysteme von Anbaugerät und Trägerfahrzeug ebenfalls ohne direkte, manuelle Eingriffe des Fahrers erfolgt.

In einer bevorzugten Weiterbildung der Erfindung wird dies mit Hilfe von zwei korrespondierenden Koppeleinheiten realisiert, wobei die erste Koppeleinheit anbaugeräteseitig angebracht und die zweite Koppeleinheit trägerfahrzeugseitig angebracht ist. Jede Koppeleinheit umfasst jeweils mindestens einen elektrischen Koppler, der mit dem jeweiligen elektrischen System verbunden ist, und/oder jeweils mindestens einen hydraulischen Koppler, der mit dem jeweiligen hydraulischen System verbunden ist, und/oder jeweils mindestens einen weiteren Medienkoppler, der mit mindesten einem weiteren Mediensystem verbunden ist. Werden die zwei korrespondierenden Koppeleinheiten in Eingriff gebracht, sind die elektrischen Systeme und/oder die hydraulischen Systeme und/oder die weiteren Mediensysteme von Anbaugerät und Trägerfahrzeug miteinander verbunden. Die zwei korrespondierenden Koppeleinheiten sind derart am Trägerfahrzeug bzw. am Anbaugerät angeordnet, dass sie sich im Eingriff befinden, wenn das Tragrohr in die angehobene Position bewegt ist, und dass sie sich nicht im Eingriff befinden, wenn das Tragrohr in die abgesenkte Position bewegt ist. Beim Aufnehmen des Anbaugeräts (s. o.) stellt sich bei dieser Weiterbildung automatisch zugleich auch die hydraulische und/oder elektrische und/oder sonstige Verbindung geräteseitiger Verbraucher mit dem entsprechenden System des Trägerfahrzeugs her.

Ganz im Einklang mit der Zielsetzung ist es überdies, wenn mit Hilfe von Sensoren erfasst wird, ob das Verbinden von Anbaugerät und Trägerfahrzeug ordnungsgemäß erfolgt, und mittels einer Signaleinrichtung (welche sich vorzugsweise im Führerhaus befindet) dem Fahrer ein entsprechendes optisches und/oder akustisches Signal zugespielt wird.

Zu diesem Zwecke umfasst das Trägerfahrzeug in einer bevorzugten Weiterbildung der Erfindung Sensoren sowie ein (mit den Sensoren verbundenes) Fahrerinformationssystem mit einer Signaleinrichtung, wobei die Sensoren geeignet sind, das ordnungsgemäße Verbinden von Fahrzeugplatte und Geräteplatte sowie ggf. das ordnungsgemäße Eingreifen der beiden Koppeleinheiten zu detektieren. Im Falle einer ordnungsgemäßen Verbindung von Fahrzeug- und Geräteplatte und eines ordnungsgemäßen Eingreifens der beiden Koppeleinheiten senden die Sensoren entsprechende Sensorsignale an das Fahrerinformationssystem, welche dann von der Signaleinheit in ein korrespondierendes, an den Fahrer gerichtetes Benachrichtigungssignal, insbesondere optischer oder akustischer Natur, umgesetzt werden.

Eine weitere besonders vorteilhafte Ausführungsform sieht vor, dass die Tragrohreinheit mindestens einen Tragarm umfasst, der fest mit dem Tragrohr verbunden und drehbar um eine horizontale, parallel zum Tragrohr liegenden Rotationsachse an der Fahrzeugplattenbasis gelagert ist, wobei durch Rotation des Tragarms gegenüber der Fahrzeugplattenbasis die Lage des Tragrohrs in der seitlichen Projektion entlang einer Kreisbahn um die Rotationsachse veränderbar ist. "Drehbar" bedeutet in diesem Zusammenhang "um einen gewissen, begrenzten Winkelbereich drehbar".

Hierdurch wird auf einfache Weise erreicht, dass das Tragrohr beim Absenken nicht nur nach unten, sondern gleichzeitig auch nach vorne bewegt wird. Durch dieses Nach-Vorne-Bewegen kann das Tragrohr in einen Bereich rücken, der von der Fahrerposition aus besser einsehbar ist, was wiederum dem Fahrer das präzise Heranfahren des Trägerfahrzeugs an das Anbaugerät erleichtert. Dadurch wird die Gefahr unbeabsichtigter Kollisionen reduziert und somit das Verbinden von Anbaugerät und Trägerfahrzeug wiederum einfacher, sicherer und weniger fehleranfällig.

Dieses gewünschte Nach-Vorne-Bewegen des Tragrohrs lässt sich in einer anderen, gleichsam bevorzugten Ausführungsform ebenfalls realisieren, wenn statt Tragarmen Gelenkstangenanordnungen zum Einsatz kommen. Erfindungsgemäß umfasst die Tragrohreinheit in dieser bevorzugten Ausführungsform mindestens eine Gelenkstangenanordnung, die mindestens zwei Stangen und mindestens ein die zwei Stangen beweglich miteinander verbindendes Gelenk umfasst, wobei die Gelenkstangenanordnung fest mit dem Tragrohr verbunden und beweglich an der Fahrzeugplattenbasis gelagert ist. Durch Schwenken der Gelenkstangenanordnung gegenüber der Fahrzeugplattenbasis ist die Lage des Tragrohrs in der seitlichen Projektion entlang einer Kurve, die translatorische und rotatorische Komponenten aufweist, veränderbar.

Gemäß einer weiteren bevorzugten Weiterbildung der Erfindung ist das Sondernutzfahrzeug dadurch gekennzeichnet, dass ein einziger Verriegelungs-Aktuator sowohl auf das mindestens eine Riegelelement als auch auf die zwei Geräteplatten-Verriegelungszapfen einwirkt. Durch die hiermit erzielte Reduktion der Anzahl der benötigten Verriegelungs-Aktuatoren können die Produktions- sowie die Wartungskosten des Sondernutzfahrzeugs gesenkt werden. Weiterhin lässt sich die Anbauvorrichtung so kompakt und mit vergleichsweise geringer Komplexität ausführen. Eine besonders bevorzugte Umsetzung diese Ansatzes ist dadurch gekennzeichnet, dass die zwei Geräteplatten-Verriegelungszapfen im Wesentlichen in horizontaler Richtung bewegbar sind, das mindestens eine Riegelelement im Wesentlichen in vertikaler Richtung bewegbar ist und der Verriegelungs-Aktuator einen horizontal wirkenden Linear-Aktuator (beispielsweise ausgeführt als Hydraulikzylinder) umfasst. Für die Betätigung des mindestens einen Riegelelements wird die horizontale Wirkrichtungskomponente des Linear-Aktuators hierbei mittels mindestens eines Getriebes, welches beispielsweise als Kniehebel ausgeführt sein kann, in eine vertikale Wirkrichtungskomponente umgesetzt. Ein Kniehebel umfasst dabei mindestens zwei miteinander gelenkig verbundene Hebelelemente.

Der Zuverlässigkeit sowie der Langlebigkeit des Schnellwechselsystems ist es zuträglich, wenn empfindliche und bewegliche Komponenten vor Witterungseinflüssen sowie aufgewirbeltem Schmutz/Schnee weitestgehend geschützt werden. Dies wird in einer anderen besonders bevorzugten Weiterbildung der Erfindung dadurch erreicht, dass die empfindlichen und beweglichen Komponenten (wie der Verriegelungs-Aktuator, die mindestens eine Tragrohr-Aktuatoreinheit, die mindestens eine Geräteplatten-Verriegelungseinheit und die mindestens eine Tragrohr-Verriegelungseinheit) im Wesentlichen innerhalb einer kastenförmigen Einhausung angeordnet sind. Die kastenförmige Einhausung ist dabei Teil der Fahrzeugplattenbasis und umfasst eine Rückplatte, mindestens zwei im Wesentlichen senkrecht zur Rückplatte stehenden Wangenplatten sowie mindestens eine Frontplatte.

In einer weiteren vorteilhaften Weiterbildung der Erfindung ist an besagter Rückplatte eine Abschleppvorrichtung anbringbar, wodurch das Einsatzspektrum des erfinderischen Sondernutzfahrzeugs in Richtung Fahrzeugbergung vergrößert sowie die Bergung des Sondernutzfahrzeugs selbst erleichtert wird.

Mit dem Ziel einer weitestgehenden Entlastung der mindestens einen Tragrohr-Aktuatoreinheit (wenn sich das Anbaugerät in der angehobenen Verriegelungsposition befindet) ist es weiterhin besonders vorteilhaft, wenn (bei in angehobener Position befindlichem und spielfrei mit dem mindestens einen Tragrohranschlag in Kontakt stehenden Tragrohr) der mindestens eine Tragrohranschlag das Tragrohr zumindest teilweise untergreift und abstützt, so dass vertikale Kräfte vom Tragrohr über den mindestens einen Tragrohranschlag auf die Fahrzeugplattenbasis übertragbar sind und somit nicht (zumindest nicht allein) über die mindestens eine Tragrohr-Aktuatoreinheit abgefangen werden müssen.

Mit der Absicht der weitestgehenden Vermeidung von Biegemomenten innerhalb des Tragrohrs (wenn sich das Anbaugerät in der angehobenen Verriegelungsposition befindet) ist es weiterhin besonders vorteilhaft, wenn die mindestens eine Hakenstruktur der Geräteplatte in ihrer horizontalen Ausdehnung mit dem mindestens einen Tragrohranschlag überlappt oder zumindest unmittelbar benachbart hierzu angeordnet ist.

Nur der Vollständigkeit halber wird an dieser Stelle explizit darauf hingewiesen, dass die einzelnen Merkmale der oben ausgeführten, bevorzugten Ausführungsformen der Erfindung auch in anderer Weise miteinander kombinierbar sind. Ferner ist zur Vermeidung von Fehlvorstellungen zu betonen, dass die Angabe, wonach die Fahrzeugplattenbasis unbeweglich am Trägerfahrzeug angebracht ist, keinesfalls auf eine unlösbare Verbindung geschlossen werden darf. Vielmehr sind von der vorliegenden Erfindung durchaus auch Ausgestaltungen mit beschädigungsfrei vom Trägerfahrzeug demontierbarer Fahrzeugplatte umfasst.

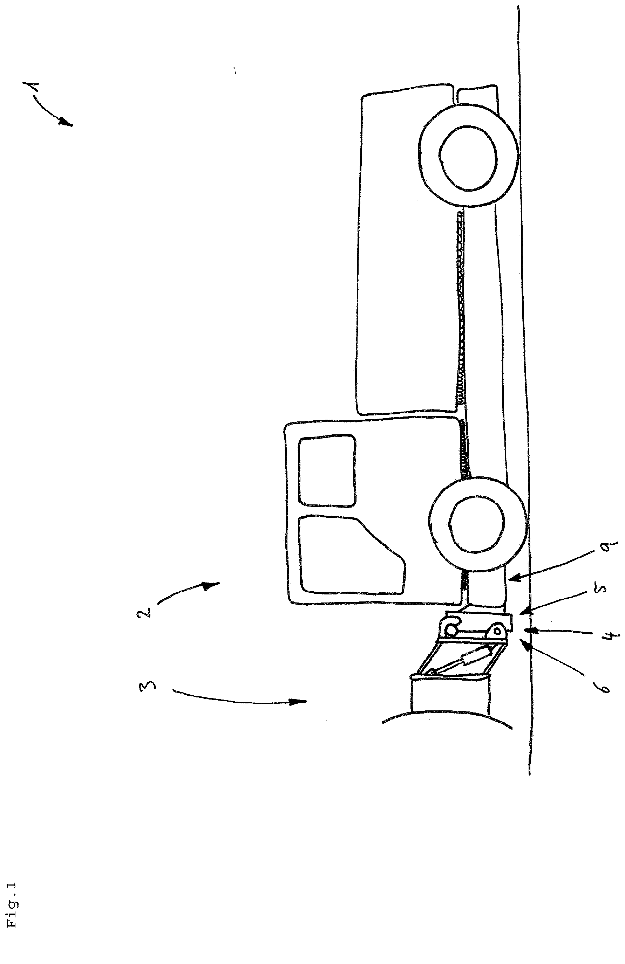

Im Folgenden wird die vorliegende Erfindung anhand eines in den Zeichnungen veranschaulichten bevorzugten Ausführungsbeispiels näher erläutert. Dabei zeigt
- Fig.1: die schematische Seitenansicht,

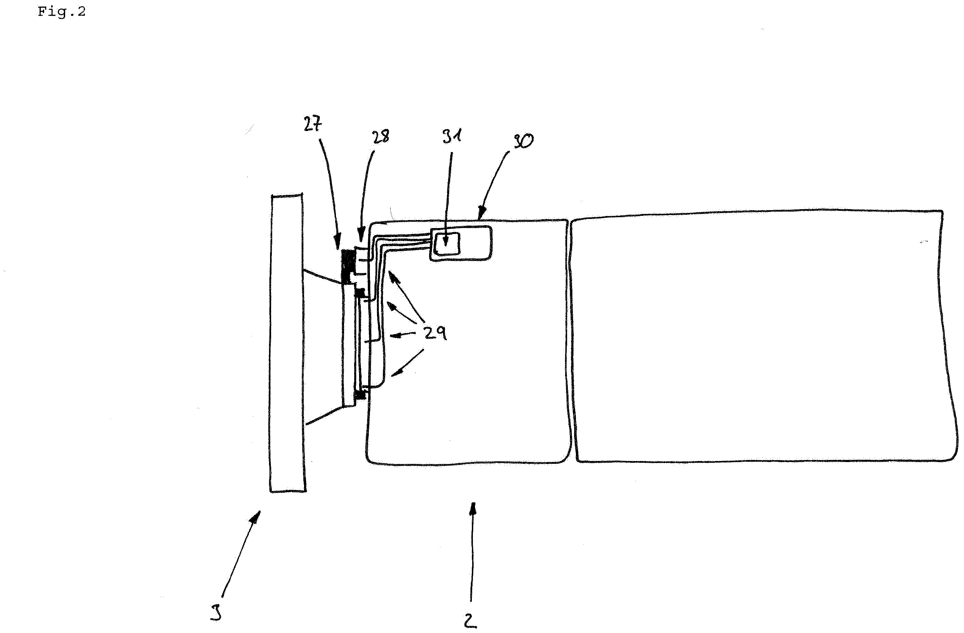

- Fig.2: die schematische Draufsicht eines Sondernutzfahrzeugs nach der vorliegenden Erfindung. Weiterhin zeigen
- Fig.3: eine Schnellwechseleinrichtung mit Geräteplatte und Fahrzeugplatte in Verriegelungsposition (Fig.3a) und in Ruheposition (Fig.3b),
- Fig.4: eine Fahrzeugplatte mit Tragrohr in angehobener Position (Fig.4a) und abgesenkter Position (Fig.4b) und
- Fig.5: eine Fahrzeugplatte ohne Frontplatte zur besseren Sichtbarkeit der in der Einhausung untergebrachten Komponenten mit Tragrohr in angehobener Position (Fig.5a) und abgesenkter Position (Fig.5b) nach der vorliegenden Erfindung.

Das in der Zeichnung veranschaulichte Sondernutzfahrzeug 1 umfasst in als solches bekannter und daher an dieser Stelle nicht vertieft erläuterter Weise ein Trägerfahrzeug 2, ein Anbaugerät 3 und eine Schnellwechseleinrichtung 4 zum auswechselbaren Anbringen des Anbaugeräts frontseitig am Trägerfahrzeug, mit einer fest am Trägerfahrzeug angeordneten Fahrzeugplatte 5 und einer mit dieser verbindbaren, am Anbaugerät angeordneten Geräteplatte 6. Letztere umfasst wiederum eine Aufnahme 7 sowie eine Hakenstruktur 8.

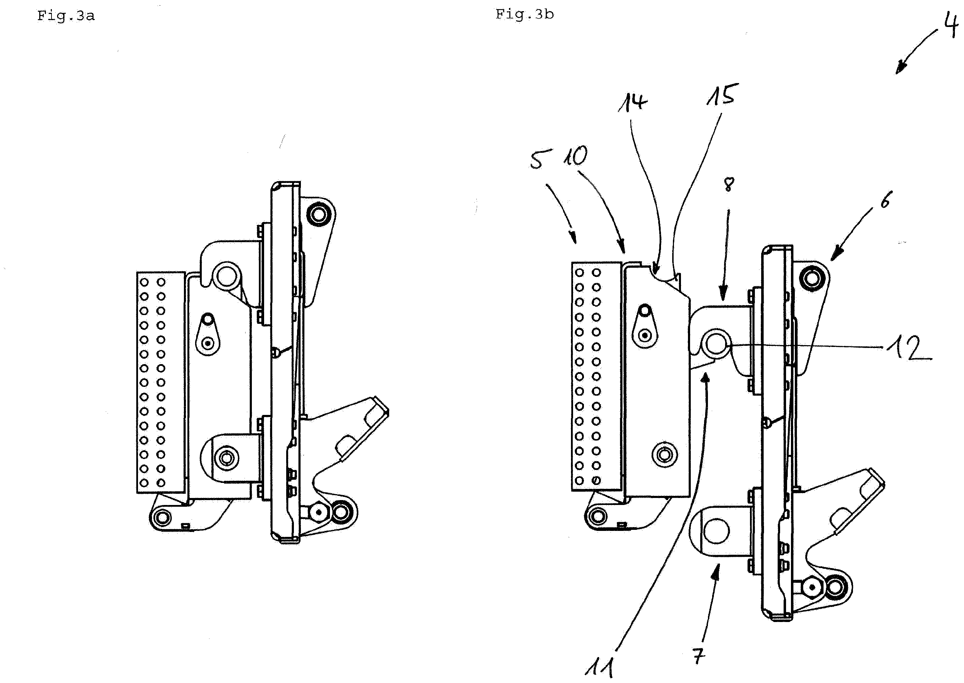

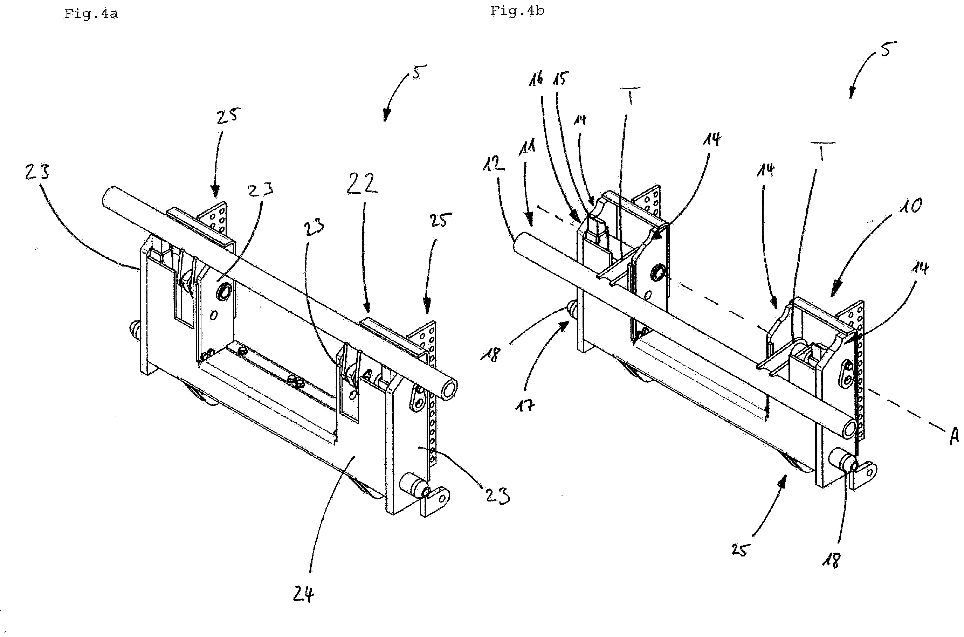

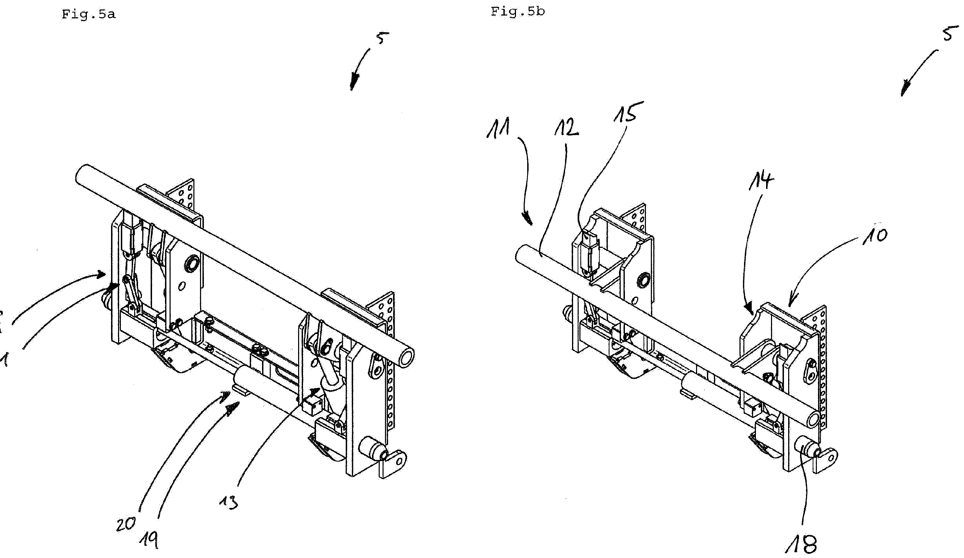

Die Fahrzeugplatte 5 umfasst dabei:
- Eine unbeweglich mit dem Chassis 9 des Trägerfahrzeugs 2 verbundene Fahrzeugplattenbasis 10,
- eine beweglich an der Fahrzeugplattenbasis 10 angelenkte Tragrohreinheit 11 mit einem sich horizontal vor der Front des Trägerfahrzeugs 2 erstreckenden Tragrohr 12, wobei das Tragrohr mittels zweier Tragrohr-Aktuatoreinheiten 13 in eine abgesenkte Position (dargestellt in Fig.3b, Fig.4b und Fig.5b) und eine angehobene Position (dargestellt in Fig.3a, Fig.4a und Fig.5a) bewegbar ist. Die Tragrohreinheit 11 umfasst weiterhin zwei Tragarme T, die fest mit dem Tragrohr 12 verbunden und drehbar um eine horizontale, parallel zum Tragrohr liegenden Rotationsachse A an der Fahrzeugplattenbasis 10 gelagert sind, wobei durch Rotation der Tragarme gegenüber der Fahrzeugplattenbasis die Lage des Tragrohrs in der seitlichen Projektion entlang einer Kreisbahn um die Rotationsachse veränderbar ist. Die Hakenstruktur 8 der Geräteplatte 6 ist dabei dazu geeignet am Tragrohr 12 der Fahrzeugplatte anzugreifen. Die Fahrzeugplatte 5 umfasst ferner:
- Vier Tragrohranschläge 14,
- zwei, je ein Riegelelement 15 umfassende, Tragrohr-Verriegelungseinheiten 16, wobei die Riegelelemente in eine aktive und inaktive Stellung bewegbar sind (dargestellt ist in den Zeichnungen jeweils die aktive Position). Sind das Tragrohr 12 in die angehobene Position und die zwei Riegelelemente 15 in die aktive Stellung bewegt (dargestellt in Fig.3a, Fig.4a und Fig.5a), steht die Tragrohreinheit 11, nämlich deren Tragrohr 12, spielfrei mit den vier Tragrohranschlägen 14 und den zwei Riegelelementen 15 in Kontakt. Dabei untergreifen die Tragrohranschläge 14 das Tragrohr 12 und stützen dieses somit ab, sodass vertikale Kräfte vom Tragrohr über die Tragrohranschläge auf die Fahrzeugplattenbasis 10 übertragen werden können. Darüber hinaus umfasst die Fahrzeugplatte 5:
- Eine Geräteplatten-Verriegelungseinheit 17 mit zwei bewegbaren und zum Zusammenwirken mit den hierzu korrespondierenden Aufnahmen 7 an der Geräteplatte 6 geeigneten Geräteplatten-Verriegelungszapfen 18. Wird mittels Bewegung des Tragrohrs 12 aus der abgesenkten Position in die angehobene Position (bei an das Tragrohr an greifender Hakenstruktur 8 der Geräteplatte 6) das Anbaugerät 3 aus einer Ruheposition in eine Verriegelungsposition angehoben, fluchten die Geräteplatten-Verriegelungszapfen 18 und die korrespondierenden Aufnahmen 7 an der Geräteplatte zueinander.

Die im dargestellten Ausführungsbeispiel dargestellte Fahrzeugplatte 5 zeichnet sich darüber hinaus dadurch aus,
- dass ein einziger Verriegelungs-Aktuator 19 sowohl auf die zwei Riegelelemente 15 als auch auf die zwei Geräteplatten-Verriegelungszapfen 18 einwirkt und
- dass die zwei Geräteplatten-Verriegelungszapfen 18 im Wesentlichen in horizontaler Richtung bewegbar sind, die zwei Riegelelement 15 im Wesentlichen in vertikaler Richtung bewegbar sind und der Verriegelungs-Aktuator 19 einen horizontal wirkenden Linear-Aktuator 20 umfasst und
- eine horizontale Wirkrichtungskomponente des Linear-Aktuators mittels zweier Getriebe G, ausgeführt als Kniehebel 21, in eine vertikale Wirkrichtungskomponente umgesetzt wird.

Weiterhin umfasst die Fahrzeugplattenbasis 10 eine Rückplatte 22, vier im Wesentlichen senkrecht zur Rückplatte stehenden Wangenplatten 23, eine Frontplatte 24 sowie zwei Chassismontagestrukturen 25, geeignet zur festen Verbindung der Fahrzeugplattenbasis mit dem Chassis 9 des Trägerfahrzeugs 2, wobei die Rückplatte, die vier Wangenplatten sowie die Frontplatte Teile einer kastenförmigen Einhausung sind.

Durch die Anordnung des Verriegelungs-Aktuators 19, der zwei Tragrohr-Aktuatoreinheiten 13, der Geräteplatten-Verriegelungseinheit 17 und der zwei Tragrohr-Verriegelungseinheiten 16 im Wesentlichen innerhalb der kastenförmigen Einhausung können diese Bauteile - wie weiter oben bereits ausgeführt - vor schädlichen Witterungs- und Schmutzeinwirkungen bewahrt werden.

Ferner befindet sich eine anbaugeräteseitig angebrachte erste Koppeleinheit 27 sowie eine trägerfahrzeugseitig angebrachte (mit der ersten Koppeleinheit korrespondierende) zweite Koppeleinheit 28 in Eingriff, wodurch die Hydrauliksysteme und/oder die Elektriksysteme und/oder weitere Mediensysteme von Anbaugerät und Trägerfahrzeug miteinander verbindbar sind.

Darüber hinaus umfasst das Trägerfahrzeug Sensoren 29 sowie ein mit den Sensoren verbundenes Fahrerinformationssystem 30 mit einer Signaleinrichtung 31. Die Sensoren 29 sind geeignet, das ordnungsgemäße Verbinden von Fahrzeugplatte 5 und Geräteplatte 6 sowie das ordnungsgemäße Eingreifen der beiden Koppeleinheiten 27, 28 zu detektieren und senden im Falle einer ordnungsgemäßen Verbindung von Fahrzeug- und Geräteplatte 5, 6 und eines ordnungsgemäßen Eingreifens der beiden Koppeleinheiten 27, 28 entsprechende Sensorsignale an das Fahrerinformationssystem 30, welche von der Signaleinheit 31 in ein entsprechendes Benachrichtigungssignal, insbesondere optischer oder akustischer Natur, umgesetzt werden.

## Patentansprüche

1. Sondernutzfahrzeug (1), insbesondere für kommunale Anwendungen, umfassend ein Trägerfahrzeug (2), ein Anbaugerät (3) und eine Schnellwechseleinrichtung (4) zum auswechselbaren Anbringen des Anbaugeräts (3) frontseitig am Trägerfahrzeug (2), mit einer fest am Trägerfahrzeug (2) angeordneten Fahrzeugplatte (5) und einer mit dieser verbindbaren, am Anbaugerät (3) angeordneten Geräteplatte (6), wobei die Fahrzeugplatte (5) umfasst:
- eine unbeweglich mit dem Chassis (9) des Trägerfahrzeugs (2) verbundene Fahrzeugplattenbasis (10),
- eine beweglich an der Fahrzeugplattenbasis (10) angelenkte Tragrohreinheit (11) mit einem sich horizontal vor der Front des Trägerfahrzeugs (2) erstreckenden Tragrohr (12), wobei das Tragrohr (12) mittels mindestens einer Tragrohr-Aktuatoreinheit (13) in eine abgesenkte Position und eine angehobene Position bewegbar ist,
- mindestens einen Tragrohranschlag (14),
- mindestens eine ein Riegelelement (15) umfassende Tragrohr-Verriegelungseinheit (16), wobei das Riegelelement (15) in eine aktive und inaktive Stellung bewegbar ist,
- mindestens eine Geräteplatten-Verriegelungseinheit (17) mit zwei bewegbaren und zum Zusammenwirken mit korrespondierenden Aufnahmen (7) an der Geräteplatte (6) geeigneten Geräteplatten-Verriegelungszapfen (18);
wobei, wenn das Tragrohr (12) in die angehobene Position und das mindestens eine Riegelelement (15) in die aktive Stellung bewegt ist, die Tragrohreinheit (11) spielfrei mit dem mindestens einen Tragrohranschlag (14) und dem mindestens einen Riegelelement (15) in Kontakt steht, wobei die Geräteplatte (6) mindestens eine Hakenstruktur (8) umfasst, die geeignet ist am Tragrohr (12) der Fahrzeugplatte (5) anzugreifen,
wobei, mittels Bewegung des Tragrohrs (12) aus der abgesenkten Position in die angehobene Position bei an das Tragrohr angreifender Hakenstruktur (8) der Geräteplatte (6), das Anbaugerät (3) aus einer Ruheposition in eine Verriegelungsposition anhebbar ist, in der die Geräteplatten-Verriegelungszapfen (18) und die korrespondierenden Aufnahmen (7) an der Geräteplatte (6) zueinander fluchten.

2. Sondernutzfahrzeug (1) nach Anspruch 1, **dadurch gekennzeichnet, dass** ein einziger Verriegelungs-Aktuator (19) sowohl auf das mindestens eine Riegelelement (15) als auch auf die mindestens zwei Geräteplatten-Verriegelungszapfen (18) einwirkt.

3. Sondernutzfahrzeug (1) nach Anspruch 2, **dadurch gekennzeichnet, dass** die mindestens zwei Geräteplatten-Verriegelungszapfen (18) im Wesentlichen in horizontaler Richtung bewegbar sind, das mindestens eine Riegelelement (15) im Wesentlichen in vertikaler Richtung bewegbar ist und der Verriegelungs-Aktuator (19) einen horizontal wirkenden Linear-Aktuator (20) umfasst,
wobei eine horizontale Wirkrichtungskomponente des Linear-Aktuators (20) mittels mindestens eines Getriebes (G) in eine vertikale Wirkrichtungskomponente umgesetzt wird.

4. Sondernutzfahrzeug (1) nach Anspruch 3 **dadurch gekennzeichnet, dass** das mindestens eine Getriebe (G) als Kniehebel (21) ausgeführt ist.

5. Sondernutzfahrzeug (1) nach einem der Ansprüche 1 bis 4, **dadurch gekennzeichnet, dass** die Fahrzeugplattenbasis (10) eine Rückplatte (22), mindestens zwei im Wesentlichen senkrecht zur Rückplatte (22) stehenden Wangenplatten (23), mindestens eine Frontplatte (24) sowie mindestens eine Chassismontagestruktur (25), geeignet zur festen Verbindung der Fahrzeugplattenbasis (10) mit dem Chassis (9) des Trägerfahrzeugs (2), umfasst,
wobei die Rückplatte (22), die mindestens zwei Wangenplatten (23) sowie die mindestens eine Frontplatte (24) Teile mindestens einer kastenförmigen Einhausung sind.

6. Sondernutzfahrzeug (1) nach Anspruch 5, **dadurch gekennzeichnet, dass** der Verriegelungs-Aktuator (19) und/oder die mindestens eine Tragrohr-Aktuatoreinheit (13) und/oder die mindestens eine Geräteplatten-Verriegelungseinheit (17) und/oder die mindestens eine Tragrohr-Verriegelungseinheit (16) im Wesentlichen innerhalb der mindestens einen kastenförmigen Einhausung angeordnet sind.

7. Sondernutzfahrzeug (1) nach Anspruch 5 oder 6, **dadurch gekennzeichnet, dass** an der Rückplatte (22) eine Abschleppvorrichtung anbringbar ist.

8. Sondernutzfahrzeug (1) nach einem der Ansprüche 1 bis 7, **dadurch gekennzeichnet, dass** bei in angehobener Position befindlichem und spielfrei mit dem mindestens einen Tragrohranschlag (14) in Kontakt stehendem Tragrohr (12) der mindestens eine Tragrohranschlag (14) das Tragrohr (12) zumindest teilweise untergreift und abstützt, sodass vertikale Kräfte vom Tragrohr (12) über den mindestens einen Tragrohranschlag (14) auf die Fahrzeugplattenbasis (10) übertragbar sind.

9. Sondernutzfahrzeug (1) nach einem der Ansprüche 1 bis 8, **dadurch gekennzeichnet, dass** die mindestens eine Hakenstruktur (8) der Geräteplatte (6) in ihrer horizontalen Ausdehnung mit dem mindestens einen Tragrohranschlag (14) überlappt.

10. Sondernutzfahrzeug (1) nach einem der Ansprüche 1 bis 9, **dadurch gekennzeichnet, dass** die Tragrohreinheit (11) mindestens einen Tragarm (T) umfasst, der fest mit dem Tragrohr (12) verbunden und drehbar um eine horizontale, parallel zum Tragrohr liegenden Rotationsachse (A) an der Fahrzeugplattenbasis (10) gelagert ist, wobei durch Rotation des Tragarms (T) gegenüber der Fahrzeugplattenbasis (10) die Lage des Tragrohrs (12) in der seitlichen Projektion entlang einer Kreisbahn um die Rotationsachse (A) veränderbar ist.

11. Sondernutzfahrzeug (1) nach einem der Ansprüche 1 bis 9, **dadurch gekennzeichnet, dass** die Tragrohreinheit (11) mindestens eine Gelenkstangenanordnung umfasst, die mindestens zwei Stangen und mindestens ein die zwei Stangen beweglich miteinander verbindendes Gelenk umfasst, wobei die Gelenkstangenanordnung fest mit dem Tragrohr (12) verbunden und beweglich an der Fahrzeugplattenbasis (10) gelagert ist, wobei durch Schwenken der Gelenkstangenanordnung gegenüber der Fahrzeugplattenbasis (10) die Lage des Tragrohrs (12) in der seitlichen Projektion entlang einer Kurve, die translatorische und rotatorische Komponenten aufweist, veränderbar ist.

12. Sondernutzfahrzeug (1) nach einem der Ansprüche 1 bis 11, **dadurch gekennzeichnet, dass** das Anbaugerät (3) sowie das Trägerfahrzeug (2) jeweils ein Hydrauliksystem mit mindestens einem hydraulischen Koppler und/oder jeweils ein Elektriksystem mit mindestens einem elektrischen Koppler und/oder jeweils mindestens ein weiteres Mediensystem mit mindestens einem Medienkoppler umfassen, wobei der mindestens eine hydraulische Koppler und/oder der mindestens eine elektrische Koppler und/oder der mindestens eine Medienkoppler des Anbaugeräts Teil einer anbaugeräteseitig angebrachten ersten Koppeleinheit (27) ist und wobei der mindestens eine hydraulische Koppler und/oder der mindestens eine elektrische Koppler und/oder der mindestens eine Medienkoppler des Trägerfahrzeugs (2) Teil einer trägerfahrzeugseitig angebrachten zweiten Koppeleinheit (28) ist,
wobei die erste und die zweite Koppeleinheit (27, 28) miteinander korrespondieren und durch in Eingriff bringen der beiden Koppeleinheiten die Hydrauliksysteme und/oder die Elektriksysteme und/oder die weiteren Mediensysteme von Anbaugerät (3) und Trägerfahrzeug (2) miteinander verbindbar sind,
wobei, wenn das Tragrohr (12) in die angehobene Position bewegt ist, die beiden Koppeleinheiten (27,28) in Eingriff befindlich sind und wobei, wenn das Tragrohr (12) in die abgesenkte Position bewegt ist, die beiden Koppeleinheiten (27, 28) nicht in Eingriff befindlich sind.

13. Sondernutzfahrzeug (1) nach einem der Ansprüche 1 bis 11, **dadurch gekennzeichnet, dass** das Trägerfahrzeug (2) Sensoren (29) sowie ein mit den Sensoren (29) verbundenes Fahrerinformationssystem (30) mit einer Signaleinrichtung (31) umfasst,
wobei die Sensoren (29) geeignet sind, das ordnungsgemäße Verbinden von Fahrzeugplatte (5) und Geräteplatte (6) zu detektieren und im Falle einer ordnungsgemäßen Verbindung von Fahrzeugplatte (5) und Geräteplatte (6)entsprechende Sensorsignale an das Fahrerinformationssystem (30) zu senden, welche von der Signaleinheit (31) in ein entsprechendes Benachrichtigungssignal, insbesondere optischer oder akustischer Natur, umgesetzt werden.

14. Sondernutzfahrzeug (1) nach dem Anspruch 12, **dadurch gekennzeichnet, dass** das Trägerfahrzeug (2) Sensoren (29) sowie ein mit den Sensoren (29) verbundenes Fahrerinformationssystem (30) mit einer Signaleinrichtung (31) umfasst,
wobei die Sensoren (29) geeignet sind, das ordnungsgemäße Verbinden von Fahrzeugplatte (5) und Geräteplatte (6) sowie das ordnungsgemäße Eingreifen der beiden Koppeleinheiten (27, 28) zu detektieren und im Falle einer ordnungsgemäßen Verbindung von Fahrzeugplatte (5) und Geräteplatte (6) und eines ordnungsgemäßen Eingreifens der beiden Koppeleinheiten (27, 28) entsprechende Sensorsignale an das Fahrerinformationssystem (30) zu senden, welche von der Signaleinheit (31) in ein entsprechendes Benachrichtigungssignal, insbesondere optischer oder akustischer Natur, umgesetzt werden.

## Claims

1. A special utility vehicle (1), in particular for municipal applications, comprising a carrier vehicle (2), an attachment (3) and a quick-changed device (4) for interchangeably attaching the attachment (3) to the front of the carrier vehicle (2), having a vehicle panel (5) firmly arranged on the carrier vehicle (2) and a component panel (6) that can be connected to the vehicle panel (5) and is arranged on the attachment (3), wherein the vehicle panel (5) comprises:
- a vehicle panel base (10) immovably connected to the chassis (9) of the carrier vehicle (2),
- a support tube unit (11) hinged moveably to the vehicle panel base (10) having a support tube (12) extending horizontally in front of the front of the carrier vehicle (2), wherein the support tube (12) can be moved to a lowered position and a raised position by means of at least one support tube actuator unit (13),
- at least one support tube stop (14),
- at least one support tube locking unit (16) comprising a locking element (15), wherein the locking element (15) can be moved to an active and inactive position,
- at least one component panel locking unit (17) having two moveable component panel locking pins (18) suitable for interacting with corresponding receptacles (7) on the component panel (6);
wherein, if the support tube (12) is moved to the raised position and the at least one locking element (15) is moved to the active position, the support tube unit (11) is in contact with the at least one support tube stop (14) and the at least one locking element (15) without play, wherein the component panel (6) comprises at least one hook structure (8), which is suitable for engaging the support tube (12) of the vehicle panel (5), wherein by means of moving the support tube (12) from the lowered position into the raised position with the hook structure (8) of the component panel (6) engaging the support tube, the attachment (3) can be raised from a rest position to a locking position, in which the component panel locking pins (18) and the corresponding receptacles (7) on the component panel (6) are aligned with one another.

2. The special utility vehicle (1) according to Claim 1, **characterized in that** an individual locking actuator (19) acts both on the at least one locking element (15) and on the at least two component panel locking pins (18) .

3. The special utility vehicle (1) according to Claim 2, **characterized in that** the at least two component panel locking pins (18) can be moved substantially in a horizontal direction, **in that** at least one locking element (15) can be moved substantially in a vertical direction and the locking actuator (19) comprises a horizontally acting linear actuator (20), wherein a horizontal effective direction component of the linear actuator (20) is converted into a vertical effective direction component by means of at least one gear (G).

4. The special utility vehicle (1) according to Claim 3, **characterized in that** the at least one gear (G) is designed as a toggle lever (21).

5. The special utility vehicle (1) according to one of Claims 1 to 4, **characterized in that** the vehicle panel base (10) comprises a rear panel (22), act least two cheek panels (23) substantially perpendicular to the rear panel (22), at least one front panel (24) and at least one chassis mounting structure (25), suitable for fixedly connecting the vehicle panel base (10) to the chassis (9) of the carrier vehicle (2), wherein the rear panel (22), the at least two cheek panels (23) and the at least one front panel (24) are parts of at least one box-shaped enclosure.

6. The special utility vehicle (1) according to Claim 5, **characterized in that** the locking actuator (19) and/or the at least one support tube actuator unit (13) and/or the at least one component panel locking unit (17) and/or the at least one support tube locking unit (16) are arranged substantially within the at least one box-shaped enclosure.

7. The special utility vehicle (1) according to Claim 5 or 6, **characterized in that** a towing device can be attached to the rear panel (22).

8. The special utility vehicle (1) according to one of Claims 1 to 7, **characterized in that** when the support tube (12) is in a raised position and is in contact with the at least one support tube stop (14) without play, the at least one support tube stop (14) at least partially engages below and supports the support tube (12) such that vertical forces can be transmitted from the support tube (12) to the vehicle panel base (10) via the at least one support tube stop (14).

9. The special utility vehicle (1) according to one of Claims 1 to 8, **characterized in that** the at least one hook structure (8) of the component panel (6) overlaps with the at least one support tube stop (14) in its horizontal extent.

10. The special utility vehicle (1) according to one of Claims 1 to 9, **characterized in that** the support tube unit (11) comprises at least one support arm (T), which is fixedly connected to the support tube (12) and is rotatably mounted on the vehicle panel base (10) about a horizontal axis of rotation (A) lying parallel to the support tube, wherein by rotating the support arm (T) relative to the vehicle panel basis (10), the position of the support tube (12) in the lateral projection can be altered along a circular path about the axis of rotation (A).

11. The special utility vehicle (1) according to one of Claims 1 to 9, **characterized in that** the support tube unit (11) comprises at least one joint rod assembly, which comprises at least two rods and at least one joint movably connecting the two rods to one another, wherein the joint rod assembly is fixedly connected to the support tube (12) and movably mounted on the vehicle panel base (10), wherein by pivoting the joint rod assembly relative to the vehicle panel base (10), the position of the support tube (12) in the lateral projection can be altered along a curve, which has translational and rotary components.

12. The special utility vehicle (1) according to one of Claims 1 to 11, **characterized in that** the attachment (3) and the carrier vehicle (2) respectively comprise a hydraulics system having at least one hydraulic coupler and/or respectively comprise an electrical system having at least one electrical coupler and/or respectively comprise at least one further media system comprising at least one media coupler, wherein the at least one hydraulic coupler and/or the at least one electrical coupler and/or the at least one media coupler of the attachment are part of a first coupling unit (27) mounted on the attachment side and wherein the at least one hydraulic coupler and/or the at least one electrical coupler and/or the at least one media coupler of the carrier vehicle (2) are part of a second coupling unit (28) mounted on the carrier vehicle side, wherein the first and second coupling unit (27, 28) communicate with one another, and the hydraulics systems and/or the electrical systems and/or the further media systems of the attachment (3) and carrier vehicle (2) can be connected to one another by bringing the two coupling units into engagement, wherein, if the support tube (12) is moved to the raised position, the two coupling units (27, 28) are in engagement and wherein, if the support tube (12) is moved to the lowered position, the two coupling units (27, 28) are not in engagement.

13. The special utility vehicle (1) according to one of Claims 1 to 11, **characterized in that** the carrier vehicle (2) comprises sensors (29) and a driver information system (30) connected to the sensors (29) having a signal device (31), wherein the sensors (29) are designed to detect the correct connection of the vehicle panel (5) and component panel (6) and in the case of a correct connection of the vehicle panel (5) and component panel (6) to send corresponding sensor signals to the driver information system (30), which are converted by the signal unit (31) into a corresponding notification signal, in particular of a visual or audible nature.

14. The special utility vehicle (1) according to Claim 12, **characterized in that** the carrier vehicle (2) comprises sensors (29) and a driver information system (30) connected to the sensors (29) having a signal device (31), wherein the sensors (29) are designed to detect the correct connection of the vehicle panel (5) and component panel (6) and the correct engagement of the two coupling units (27, 28) and in the case of a correct connection of the vehicle panel (5) and component panel (6) and a correct engagement of the two coupling units (27, 28) to send corresponding sensor signals to the driver information system (30), which are converted by the signal unit (31) into a corresponding notification signal, in particular of a visual or audible nature.

## Revendications

1. Véhicule utilitaire spéciale (1), en particulier pour des applications communales, comprenant un véhicule porteur (2), un appareil rapporté (3) et un dispositif à changement rapide (4) pour montage échangeable de l'appareil rapporté (3) à l'avant sur le véhicule porteur (2), avec une plaque de véhicule (5) disposée fixement sur le véhicule porteur (2) et une plaque d'appareil (6) raccordable à celle-ci, disposée sur l'appareil rapporté (3), sachant que la plaque de véhicule (5) comprend :
- une base de plaque de véhicule (10) reliée de façon non mobile au châssis (9) du véhicule porteur (2),
- une unité tubulaire de support (11) articulée de façon mobile sur la base de plaque de véhicule (10), avec un tube porteur (12) s'étendant horizontalement devant l'avant du véhicule porteur (2), sachant que le tube porteur (12) peut être mobile dans une position abaissée et une position relevée au moyen d'au moins une unité d'actionneur de tube porteur (13),
- au moins une butée de tube porteur (14),
- au moins une unité de verrouillage de tube porteur (16) comprenant un élément de verrouillage (15), sachant que l'élément de verrouillage (15) peut être mobile dans une position active et inactive,
- au moins une unité de verrouillage de plaque d'appareil (17) avec deux broches de verrouillage de plaque d'appareil (18) adaptées à la plaque d'appareil (6), mobiles et pour coopération avec des logements (7) correspondants,
sachant que, lorsque le tube porteur (12) est déplacé dans la position relevée et au moins un élément de verrouillage (15) dans la position active, l'unité de tube porteur (11) est en contact sans jeu avec au moins une butée de tube porteur (14) et au moins un élément de verrouillage (15),
sachant que la plaque d'appareil (6) comprend au moins une structure de crochet (8), qui est adaptée pour venir en prise sur le tube porteur (12) de la plaque de véhicule (5),
sachant qu'au moyen d'un mouvement du tube porteur (12) de la position abaissée à la position relevée avec une structure en crochet (8) de la plaque d'appareil (6) venant en prise sur le tube porteur, l'appareil rapporté (3) peut être relevé d'une position de repos dans une position de verrouillage dans laquelle les broches de verrouillage de plaque d'appareil (18) et les logements correspondants (7) sont alignés sur la plaque d'appareil (6) les uns par rapport aux autres.

2. Véhicule utilitaire spéciale (1) selon la revendication 1, **caractérisé en ce qu'**un actionneur de verrouillage (19) unique agit tant sur au moins un élément de verrouillage (15) que sur au moins deux broches de verrouillage de plaque d'appareil (18).

3. Véhicule utilitaire spéciale (1) selon la revendication 2, **caractérisé en ce qu'**au moins deux broches de verrouillage de plaque d'appareil (18) peuvent être mobiles pour l'essentiel en direction horizontale, au moins un élément de verrouillage (15) peut être mobile pour l'essentiel en direction verticale et l'actionneur de verrouillage (19) comprend un actionneur linéaire (20) agissant horizontalement,
sachant qu'un composant horizontal de direction effective de l'actionneur linéaire (20) est transformé au moyen d'au moins un mécanisme (G) en un composant vertical de direction effective.

4. Véhicule utilitaire spéciale (1) selon la revendication 3, **caractérisé en ce qu'**au moins un mécanisme (G) est exécuté comme un levier coudé (21).

5. Véhicule utilitaire spéciale (1) selon l'une quelconque des revendications 1 à 4, **caractérisé en ce que** la base de plaque de véhicule (10) comprend une plaque arrière (22), au moins deux plaques de joue (23) pour l'essentiel perpendiculaires à la plaque arrière (22), au moins une plaque avant (24) ainsi qu'au moins une structure de montage de châssis (25), adaptée pour la liaison fixe de la base de plaque de véhicule (10) au châssis (9) du véhicule porteur (2),
sachant que la plaque arrière (22), au moins deux plaques de joue (23) ainsi qu'au moins une plaque avant (24) font partie au moins d'une enceinte en forme de caisson.

6. Véhicule utilitaire spéciale (1) selon la revendication 5, **caractérisé en ce que** l'actionneur de verrouillage (19) et/ou au moins une unité d'actionneur de tube porteur (13) et/ou au moins une unité de verrouillage de plaque d'appareil (17) et/ou au moins une unité de verrouillage de tube porteur (16) sont disposées pour l'essentiel à l'intérieur d'au moins une enceinte en forme de caisson.

7. Véhicule utilitaire spéciale (1) selon la revendication 5 ou 6, **caractérisé en ce qu'**un dispositif de remorquage peut être monté sur la plaque arrière (22).

8. Véhicule utilitaire spéciale (1) selon l'une quelconque des revendications 1 à 7, **caractérisé en ce que** pour un tube porteur (12) se trouvant en position relevée et en contact sans jeu avec au moins une butée de tube porteur (14), au moins une butée de tube porteur (14) saisit par-dessous et soutient au moins en partie le tube porteur (12) de telle manière que les forces verticales du tube porteur (12) peuvent être transmises à la base de plaque de véhicule (10) par le biais d'au moins une butée de tube porteur (14).

9. Véhicule utilitaire spéciale (1) selon l'une quelconque des revendications 1 à 8, **caractérisé en ce qu'**au moins une structure en crochet (8) de la plaque d'appareil (6) chevauche dans son extension horizontale au moins une butée de tube porteur (14).

10. Véhicule utilitaire spéciale (1) selon la revendication 1 à 9, **caractérisé en ce que** l'unité de tube porteur (11) comprend au moins un bras de support (T), qui est relié fermement au tube porteur (12) et est logé sur la base de plaque de véhicule (10) pouvant tourner autour d'un axe de rotation (A) horizontal, situé parallèlement au tube porteur, sachant que par rotation du bras de support (T) par rapport à la base de plaque de véhicule (10), la position du tube porteur (12) peut être modifiée dans la projection latérale le long d'une trajectoire circulaire autour de l'axe de rotation (A).

11. Véhicule utilitaire spéciale (1) selon l'une quelconque des revendications 1 à 9, **caractérisé en ce que** l'unité de tube porteur (11) comprend au moins un système de barres articulées, qui comprend au moins deux barres et au moins une articulation reliant entre elles les deux barres de façon mobile, sachant que le système de barres articulées est fermement relié au tube porteur (12) et logé de façon mobile sur la base de plaque de véhicule (10), sachant qu'en faisant pivoter le système de barres articulées par rapport à la base de plaque de véhicule (10), la position du tube porteur (12) peut être modifiée dans la projection latérale le long d'une courbe qui comporte les composants translatoires et de rotatifs.

12. Véhicule utilitaire spéciale (1) selon l'une quelconque des revendications 1 à 11, **caractérisé en ce que** l'appareil rapporté (3) ainsi que le véhicule porteur (2) comprennent respectivement un système hydraulique avec au moins un coupleur hydraulique et/ou respectivement un système électrique avec au moins un coupleur électrique et/ou respectivement au moins un autre système médiatique avec au moins un coupleur médiatique, sachant qu'au moins un coupleur hydraulique et/ou au moins un coupleur hydraulique et/ou au moins un coupleur médiatique de l'appareil rapporté font partie d'une première unité de couplage (27) montée sur l'appareil rapporté et sachant qu'au moins un coupleur hydraulique et/ou au moins un coupleur électrique et/ou au moins un coupleur médiatique du véhicule porteur (2) font partie d'une deuxième unité de couplage (28) montée sur le véhicule porteur,
sachant que la première et la deuxième unité de couplage (27, 28) correspondent entre elles et que par mise en prise des deux unités de couplage, les systèmes hydrauliques et/ou les systèmes électriques et/ou les autres systèmes médiatiques de l'appareil rapporté (3) et du véhicule porteur (2) peuvent être reliés entre eux,
sachant que, lorsque le tube porteur (12) est déplacé dans la position relevée, les deux unités de couplage (27, 28) se trouvent en prise et sachant que lorsque le tube porteur (12) est déplacé dans la position abaissée, les deux unités de couplage (27, 28) ne se trouvent pas en prise.

13. Véhicule utilitaire spéciale (1) selon l'une des revendications 1 à 11, **caractérisé en ce que** le véhicule porteur (2) comprend des capteurs (29) ainsi qu'un système d'information du conducteur (30) relié aux capteurs (29) avec un dispositif de signalisation (31),
sachant que les capteurs (29) sont adaptés pour détecter la liaison conforme de la plaque de véhicule (5) et de la plaque d'appareil (6) et en cas d'une liaison conforme de la plaque de véhicule (5) et de la plaque d'appareil (6) d'envoyer des signaux de détection correspondants au système d'information du conducteur (30), lesquels sont transformés par l'unité de signalisation (31) en un signal d'information correspondant, en particulier de nature optique ou acoustique.

14. Véhicule utilitaire spéciale (1) selon la revendication 12, **caractérisé en ce que** le véhicule porteur (2) comprend des capteurs (29) ainsi qu'un système d'information conducteur (30) relié aux capteurs (29) avec un dispositif de signalisation (31),
sachant que les capteurs (29) sont adaptés pour détecter la liaison conforme de la plaque de véhicule (5) et de la plaque d'appareil (6) ainsi que mise en prise conforme des deux unités de couplage (27, 28) et en cas d'une liaison conforme de la plaque de véhicule (5) et de la plaque d'appareil (6) et d'une mise en prise conforme des deux unités de couplage (27, 28) d'envoyer des signaux de détection correspondants au système d'information du conducteur (30), lesquels sont transformés par l'unité de signalisation (31) en un signal d'information correspondant, en particulier de nature optique ou acoustique.
